(19) Europäisches Patentamt
European Patent Office
Office européen des brevets

(11) Publication number: **0 498 431 A1**

## EUROPEAN PATENT APPLICATION

(21) Application number: **92102004.6**

(22) Date of filing: **06.02.92**

(51) Int. Cl.⁵: **B32B 18/00**, C04B 35/52

(30) Priority: **08.02.91 JP 60901/91**

(43) Date of publication of application:
**12.08.92 Bulletin 92/33**

(84) Designated Contracting States:
**DE FR GB IT**

(71) Applicant: **SUMITOMO ELECTRIC INDUSTRIES, LTD.**
**5-33, Kitahama 4-chome, Chuo-ku**
**Osaka-shi, Osaka 541(JP)**

(72) Inventor: **Abe, Tetsuya, Japan Atomic Energy Research Inst.**
**801-1, Nakahara, Mukoyama, Naka-machi**
**Nakagum, Ibaraki(JP)**
Inventor: **Murakami, Yoshio, Japan Atomic Energy Res. Inst.**
**801-1, Nakahara, Mukoyama, Naka-machi**
**Nakagum, Ibaraki(JP)**
Inventor: **Kawai, Chihiro, Itami Works of Sumitomo**
**Electric Industries, Ltd., 1-1, Koyakita 1-chome**
**Itami-shi, Hyogo(JP)**
Inventor: **Miyake, Masaya, Itami Works of Sumitomo**
**Electric Industries, Ltd., 1-1, Koyakita 1-chome**
**Itami-shi, Hyogo(JP)**

(74) Representative: **Patentanwälte Grünecker, Kinkeldey, Stockmair & Partner**
**Maximilianstrasse 58**
**W-8000 München 22(DE)**

(54) **Coated carbon-fiber-reinforced composite material.**

(57) The present invention relates to a carbon-fiber-reinforced composite material composed of carbon fiber as a reinforcing material in a matrix of a carbide of carbon and/or boron, and a coating layer comprising a surface portion of boron, a boundary portion of a carbide of boron, and a middle portion comprising boron and a carbide of boron. The concentration of boron in the coating layer changes substantially continuously from the surface portion to the boundary portion. This coated carbon-fiber-reinforced composite material is superior in heat and shock resistance, is strong against erosion friction due to energy particles, occludes tritium less, and is suitable as a material for a furnace wall of a nuclear fusion reactor.

## BACKGROUND OF THE INVENTION

### Field of the Invention

The present invention relates to a coated carbon-fiber-reinforced composite material which is useful as a material for a furnace wall of a nuclear fusion reactor.

### Description of Related Art

Carbon does not appreciably lower the temperature of a plasma, even if it is sublimated in a high-temperature plasma, because it has such a low atomic weight. Therefore, carbon-fiber-reinforced carbon composite material (C/C composite), in which carbon is formed into a matrix containing carbon fiber as a reinforcing material, has been used as a material for the furnace wall of a nuclear fusion reactor.

Other desirable qualities of C/C composite include a high melting point, a superior resistance to shock, even at temperatures of 1500° C and above, and the carbon fiber has a high heat conductivity so that it can be easily force cooled.

However, the use of C/C composite has some problems. It is eroded by friction with the high energy particles generated in nuclear fusion, and the tritium used in nuclear fusion becomes occluded with carbon.

A method for preventing such erosion friction while maintaining the high heat conductivity and shock resistance of the C/C composite is to substitute one portion of carbon arranged in a matrix by a carbide of boron (C/B4C composite). Boron (B) has an atomic weight lower than carbon so that the lowering of plasma temperature, the amount of erosion friction, and the occlusion of tritium is less.

To further reduce the erosion friction, the occlusion of tritium and the temperature loss of plasma, the surface of the C/B4C composite can be coated with boron. However, the coefficient of thermal expansion of the C/B4C composite does not match that of the boron coating. The coefficient of thermal expansion of C/B4C composite is $3.5 \times 10^{-6} K^{-1}$ - $4.9 \times 10^{-6} K^{-1}$, while that of boron is $8.3 \times 10^{-6} K^{-1}$. Such mismatching of the coefficients of thermal expansion causes heat cracks to be generated in the boron coating upon cooling to room temperature after coating the C/B4C composite with boron using a chemical vapor deposit (CVD) method or the like. When this coated material is used in a nuclear fusion reactor, the boron coating layer peels off because the C/B4C composite is worn through where there are heat cracks in the boron coating.

## SUMMARY OF THE INVENTION

An object of the present invention is to provide a coated carbon-fiber-reinforced composite material which has superior resistance to heat, shock and erosion friction, occludes tritium less, and which is suitable as a material for a furnace wall of a nuclear fusion reactor.

To attain the above object, a carbon-fiber-reinforced composite material composed of carbon fiber as a reinforcing material in a matrix of a carbide of carbon and/or boron, is coated with a coating layer comprising a surface portion of boron, a boundary portion of a carbide of boron, and a middle portion composed of boron and a carbide of boron. The concentration of boron in the coating layer changes substantially continuously from the surface portion to the boundary portion.

## DETAILED DESCRIPTION OF THE PREFERRED EMBODIMENTS

The composite of the present invention comprises a carbon-fiber-reinforced composite material containing carbon fiber as a reinforcing material in a matrix of a carbide of carbon and/or boron, and a coating layer.

The coating layer comprises a composite phase of boron and a carbide of boron. This coating layer has three portions, an externally exposed surface portion, a middle portion and a boundary portion in contact with the carbon-fiber-reinforced composite.

The surface portion is composed of boron which has a large resistance to erosion friction due to energy particles, and does not occlude tritium.

The boundary portion is composed of a carbide of boron, such as B4C, having a coefficient of thermal expansion selected to be substantially equal to that of the carbon-fiber-reinforced composite.

The middle portion is a composite phase of boron and a carbide of boron, such as B4C, wherein the concentration of boron changes substantially continuously from the surface portion to the boundary portion.

Accordingly, it is possible to make the coefficient of thermal expansion of the coating layer to change substantially continuously from the boundary portion to the surface portion. For example, where a C/B4C composite is used as the matrix in the carbon-fiber-reinforced composite, the coefficient of thermal expansion of the carbide of boron in the boundary portion is selected to be about $4 \times 10^{-6} K^{-1}$ - $5 \times 10^{-6} K^{-1}$, which is in accordance with the coefficient of thermal expansion of the C/B4C composite, which is $3.5 \times 10^{-6} K^{-1}$ - $4.9 \times 10^{-6} K^{-1}$. The coefficient of thermal expansion of the boundary portion can be changed by varying the composition of the carbide of boron.

The coefficient of thermal expansion of the coating is made to change substantially continuously from the boundary portion to the surface portion by varying the concentration of boron in the middle portion substantially continuously. The concentration of boron in the coating layer is least at the boundary portion and greatest at the surface potion. The coefficient of thermal expansion of the surface portion can be that of boron, which is $8.3 \times 10^{-6} K^{-1}$. The change in the coefficient of thermal expansion over the coating layer must be sufficiently gradual and of a sufficient amount to lessen the thermal stresses, generated during a heat cycle, enough to prevent heat cracks.

As a result, the coated carbon-fiber-reinforced composite material of the present invention has superior resistance to heat, shock and erosion friction, occludes tritium less, and is suitable as a material for a furnace wall of a nuclear fusion reactor.

A specific example of the present invention is as follows. B4C powder having an average particle size of 2 $\mu$m was used as a matrix. After being mixed with a sufficient quantity of $Al_2O_3$ powder and kneaded with acrylamide resin, the resulting B4C powder was applied onto a woven cloth of carbon fiber to thereby make a composite sheet made of the carbon fiber and the B4C powder. 30 composite sheets thus prepared were laminated one on one, heated at 500°C for three hours to remove volatile substances, and then sintered for two hours at 2000°C under a pressure of 200 Kg/cm$^2$ to produce a carbon-fiber-reinforced B4C composite material (C/B4C composite). The C/B4C composite was 50 mm in length, 50 mm in width, 5 mm in thickness, and had a resin content of 50 volume %. The measured coefficient of thermal expansion of the C/B4C composite was $4.7 \times 10^{-4} K^{-1}$.

To determine the relationship between the composition of the coating layer and the coefficient of thermal expansion, various B/B4C composite phases were applied over graphite substrates to a thickness of about 500 $\mu$m at a coating temperature of 1600°C under a coating pressure of 100 torr, by a CVD method using $BCl_3$, $CH_4$, and $H_2$ as raw-material gases. After the substrates were removed, the composition and coefficient of thermal expansion in the direction parallel to the sample surface were measured as to each of the samples. The results of measurement are shown in Table 1 together with the flow rates of the raw-material gases in the CVD method.

[Table 1]

| Sample | a | b | c | d | e | f |
|---|---|---|---|---|---|---|
| **Raw-material gas flow (l/min)** | | | | | | |
| $BCl_3$ | 1.80 | 1.80 | 1.80 | 1.80 | 1.80 | 1.80 |
| $CH_4$ | 0 | 0.10 | 0.23 | 0.29 | 0.36 | 0.40 |
| $H_2$ | 3.00 | 3.00 | 3.00 | 3.00 | 3.00 | 3.00 |
| **Produced phase** | B | $B+B_4C$ | $B+B_4C$ | $B+B_4C$ | $B+B_4C$ | $B_4C$ |
| **Composition (B atomic %)** | 100 | 95 | 91 | 87 | 84 | 80 |
| **Coefficient of thermal expansion ($\times 10^{-6}K^{-1}$)** | 8.3 | 7.7 | 7.0 | 6.2 | 5.5 | 5.2 |

From the result of Table 1, the composition of sample f was employed as the composition of the boundary portion of the coating layer which contacts the C/B4C composite and has a coefficient of thermal expansion of 4.7X $10^{-6K-1}$.

The flow rate of the raw material gas was changed in the CVD method as follows, so that a B/B4C coating layer having a thickness of about 200 $\mu$m was formed on the substrate.

$BCl_3$ (l/min) : 1.8 (constant)

$CH_4$ (l/min) : reducing from 0.4 to 0 at a rate of 0.2/hr

$H_2$ (l/min) : 3.00 (constant)

The thus produced coated carbon-fiber-reinforced composite material was disposed in a hydrogen plasma frame and heated until the surface temperature reached 2000K. This state was kept for thirty minutes, and thereafter the composite material was cooled. The B/B4C coating layer did not crack or peel off. The C/B4C composite did not experience erosion friction.

A comparative material was produced in which a coating layer made only of boron was applied on the same C/B4C composite as above to a thickness of about 200 $\mu$m using the CVD method. The same test as described above was performed on the comparative material. As a result, the boron coating layer cracked and peeled off, and the C/B4C composite experienced erosion friction.

According to the present invention, it is possible to provide a coated carbon-fiber-reinforced composite material which is superior in heat and shock resistance, which is strong against erosion friction due to energy particles, in which tritium is less occluded, and which is suitable as a material for a furnace wall of a nuclear fusion reactor.

**Claims**

1. A coated carbon-fiber-reinforced composite material comprising:

a first layer comprising a carbon-fiber-reinforced composite material containing carbon fiber as a reinforcing material in a matrix of a carbide of at least one of carbon and boron; and

a second layer comprising a boundary portion in contact with said first layer, a middle portion, and a surface portion, wherein said boundary portion comprises a carbide of boron, said surface portion comprises boron, and said middle portion comprises a composite phase of boron and a carbide of boron, and the concentration of boron in said second layer changes substantially continuously from said surface portion to said boundary portion.

2. A coated carbon-fiber-reinforced composite material according to Claim 1, wherein the coefficient of thermal expansion of said second layer changes substantially continuously from said boundary portion to said surface portion.

3. A coated carbon-fiber-reinforced composite material according to Claim 2, wherein the coefficient of thermal expansion of said boundary portion approximates the coefficient of thermal expansion of said first layer sufficiently to prevent heat cracks from forming in said first layer during temperature change.

## DOCUMENTS CONSIDERED TO BE RELEVANT

EP 92102004.6

| Category | Citation of document with indication, where appropriate, of relevant passages | Relevant to claim | CLASSIFICATION OF THE APPLICATION (Int. Cl.5) |
|---|---|---|---|
| A | CHEMICAL ABSTRACTS, vol. 108, no. 26, June 27, 1988, Columbus, Ohio, USA YAMASHITA, YUKINORI et al. "Carbon fiber-reinforced carbon composites", page 260, column 1, abstract-no. 225 867m & Jpn. Kokai Tokkyo Koho JP 6360173 -- | 1-3 | B 32 B 18/00 C 04 B 35/52 |
| A | EP - A - 0 172 378 (SUMITOMO) * Page 5, lines 6-10; page 6, lines 7-9 * -- | 1-3 | |
| A | EP - A - 0 339 606 (MITSUBISHI) * Column 1, lines 1-50 * ---- | 1-3 | |
| | | | **TECHNICAL FIELDS SEARCHED (Int. Cl.5)** B 32 B 18/00 C 04 B 35/00 |

The present search report has been drawn up for all claims

| Place of search | Date of completion of the search | Examiner |
|---|---|---|
| VIENNA | 30-04-1992 | ONDER |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

    .............................................................................
& : member of the same patent family, corresponding
   document

EPO FORM 1503 03.82 (P0401)